# EUROPEAN PATENT SPECIFICATION

(11) **EP 3 862 339 B1**
(45) Date of publication and mention of the grant of the patent: **09.08.2023**
(21) Application number: 20864256.1
(22) Date of filing: 17.04.2020
(51) Int. Cl.: C04B 41/89, C03C 8/00

(54) **METHOD FOR PREPARING AN ANTIBACTERIAL CERAMIC TILE**
VERFAHREN ZUR HERSTELLUNG EINER ANTIBAKERIELLEN KERAMIKFLIESE
PROCÉDÉ DE PRÉPARATION D'UN CARREAU EN CÉRAMIQUE ANTIBACTÉRIEN

(30) Priority: 13.12.2019 CN 201911278043
(43) Date of publication of application: 11.08.2021
(73) Proprietor: Foshan Oceano Ceramics Co., Ltd., Guangdong 528138 (CN)
(72) Inventor: KE, Shanjun, Foshan Guangdong 528138 (CN); TIAN, Wei, Foshan Guangdong 528138 (CN); MENG, Zhenming, Foshan Guangdong 528138 (CN); MA, Chao, Foshan Guangdong 528138 (CN)
(74) Representative: Berggren Oy
(86) International application number: PCT/CN2020/085400
(87) International publication number: WO 2021/114539

(56) References cited:
- CN-A- 104 844 274
- CN-A- 105 801 175
- CN-A- 108 184 898
- CN-A- 109 553 437
- CN-A- 110 256 747
- CN-A- 110 698 227
- JP-A- H0 898 876
- US-A- 5 807 641
- DATABASE WPI Week 201940 Thomson Scientific, London, GB; AN 2019-324959 XP002804879, & CN 109 553 437 A (FOSHAN OCEANO CERAMICS CO LTD) 2 April 2019 (2019-04-02)

## Description

### Cross-reference to Related Application

The present disclosure claims the priority to the Chinese patent application with the filing No. 201911278043.5 filed with the Chinese Patent Office on December 13, 2019, and entitled "Antibacterial Ceramic Tile and Method for Preparing the Same".

### Technical Field

The present disclosure relates to the field of construction ceramics, in particular, to an antibacterial ceramic tile and a method for preparing the same.

### Background Art

With the increase of living level and the improvement of working environment, people's requirements to construction ceramics have gone beyond their pure construction decorative functions, but their functionalized applications are increasingly focused. Functionalization of ceramics has become one of the major directions of the development of domestic construction ceramic industry. The antibacterial property of the construction ceramics has an important meaning for increasing the added value of products. Currently, the antibacterial ceramics mainly have the following categories: a first one is obtained by directly firing the ceramic tiles to which an antibacterial material is added; a second one is obtained by spraying the antibacterial material onto the surface of ceramic tiles and firing the ceramic tiles; and a third one is obtained by spraying the antibacterial material on the surface of finished tiles, followed by cryogenic heat treatment, thus realizing the antibacterial effect. The antibacterial material above mainly includes compounds containing silver, zinc and copper, a rare earth element antibacterial agent, titanium oxide, and so on.

Publication CN109553437 A relates to a preparation method for an antibacterial glazed ceramic brick.

Publication US5807641 A relates to an anti-bacterial and anti-fungal glaze composition for ceramic products.

The inventors found in researches that the existing antibacterial ceramic tiles have the following defect:
the antibacterial property is poor.

### Summary

Objectives of the present disclosure include, for example, providing an antibacterial ceramic tile and a method for preparing the same, so as to overcome the defect existing in the antibacterial ceramic tiles in the prior art.

Implementations of the present disclosure are realized as follows.

An implementation of the present disclosure provides an antibacterial ceramic tile, which includes an antibacterial glaze layer arranged on an upper surface of the ceramic tile, wherein the antibacterial glaze layer is composed of a basic transparent glaze and a zirconium phosphate loaded with composite antibacterial agent, the zirconium phosphate loaded with composite antibacterial agent is accumulated at an upper portion of the antibacterial glaze layer, and effective antibacterial components of the composite antibacterial agent are an antibacterial oxide and antibacterial ions.

Specifically, the present disclosure introduces a zirconium phosphate carrier having a porous structure into the transparent glaze layer on an outermost surface of the ceramic tile, and meanwhile, the composite antibacterial agent is loaded by the zirconium phosphate carrier. Due to the property of the zirconium phosphate carrier that the density thereof is lower than that of the basic transparent glaze, the zirconium phosphate carrier having undergone high-temperature firing is accumulated on the upper portion of the antibacterial glaze layer, so as to achieve the purpose of immobilizing the effective antibacterial components on the upper surface of the antibacterial glaze layer, that is, the bonding force between the antibacterial material and the ceramic tile is effectively enhanced. The antibacterial glaze layer provided in the present disclosure does not need polishing treatment, and after high-temperature firing thereof, a porous microstructure is formed on the surface of the glaze layer, that is, the porous microstructure is mainly composed of the porous structure on the surface of the zirconium phosphate carrier, which enables the effective antibacterial components in the composite antibacterial agent to be filled and penetrated into the porous structure of the zirconium phosphate carrier after subsequent spraying and heat treatment, thus, the antibacterial glaze layer is endowed with a continuous and excellent antibacterial effect.

In fact, the antibacterial ceramic tile of the present disclosure further includes a green body layer, a base glaze layer, and a decorative pattern layer provided from bottom to top, while the antibacterial glaze layer provided in the present disclosure is provided on the decorative pattern layer, located on the outermost layer of the antibacterial ceramic tile, i.e. the zirconium phosphate loaded with composite antibacterial agent provided in the present disclosure is located on the outermost surface of the antibacterial ceramic tile.

Optionally, a ceramic tile body includes the green body layer, the base glaze layer and the decorative pattern layer provided from bottom to top, the transparent glaze layer is provided on the decorative pattern layer, and an antibacterial layer is provided on the transparent glaze layer.

The raw material of the ceramic tile green body for forming the green body layer in the present disclosure is a common green body raw material of existing ceramic tiles, a base glaze for forming the base glaze layer is a common base glaze of existing ceramic tiles, and the decorative pattern layer may be obtained by a method and technology for existing ceramic tile decoration such as screen printing and ink-jet printing, which will not be described herein again.

Optionally, an addition amount of the zirconium phosphate carrier in the zirconium phosphate loaded with composite antibacterial agent is 0.5-2% of the antibacterial glaze layer by mass percentage. Specifically, if the content of the zirconium phosphate carrier is too low, the amount distributed in the glaze layer is small, then the antibacterial effect is unfavorable; and if the content of the zirconium phosphate carrier is higher than 2%, the transparency of the glaze layer will be reduced, and the decorative effect is unfavorable. Thus, the limitation of the addition amount of the zirconium phosphate carrier needs to take both the antibacterial effect and the decorative effect of the glaze layer into consideration.

Optionally, the carrier zirconium phosphate in the zirconium phosphate loaded with composite antibacterial agent is α-zirconium phosphate prepared by a hydrothermal method, and a specific surface area thereof is 100-200 m²/g. Specifically, the zirconium phosphate prepared by the hydrothermal method has a three-dimensional network porous structure, and the specific surface area is further increased, which is beneficial for attachment of the effective antibacterial components, and meanwhile also beneficial for migration of the antibacterial ions, thereby further improving the antibacterial effect.

Optionally, the antibacterial oxide is 10~30 nm zinc oxide, and the solid content thereof in the composite antibacterial agent is 3∼5%. Specifically, the antibacterial oxide not only plays an antibacterial effect synergistically with the antibacterial ions, but also has the function of filling the surface of the antibacterial glaze layer of the ceramic tile due to the fact that it has obvious granularity, and can be filled and clamped in the porous structure on the surface of the carrier zirconium phosphate, which further allows the ceramic tile surface not to need polishing treatment and have both anti-fouling and antibacterial properties. The antibacterial oxide of the present disclosure uses zinc oxide, and is defined to have the particle size of 10~30 nm, and the solid content of 3∼5%, because the zinc oxide has obvious antibacterial effect, wide sources, and a low cost compared with the antibacterial agent silver. Meanwhile, when the zinc oxide plays the antibacterial effect, a zinc-rich ion environment will be formed around the zinc oxide particles, the smaller the particle size is, the easier the zinc ions are dissolved out, but the zinc oxide less than 10 nm tends to agglomerate, thus it is better to define the particle size of zinc oxide to be 10~30 nm. Besides, if the content of zinc oxide is too low, pores are not completely filled, then the anti-fouling effect is affected; and if the content is too high, the zinc oxide is excessive, then white traces are easily formed on the tile surface, which affects the decorative effect.

Optionally, the antibacterial ions are zinc ions, and the concentration thereof in the composite antibacterial agent is 0.01∼0.03 mol/L. Specifically, the antibacterial ions play an antibacterial effect synergistically with the antibacterial oxide, and due to the fact that they have solubility and permeability, and can permeate and fill the porous structure on the surface of the zirconium phosphate carrier, they have excellent continuous antibacterial effect. The antibacterial ions of the present disclosure use zinc ions, and are defined to have the concentration of 0.01∼0.03 mol/L, because the zinc ions have a strong effect of destroying bacterial cell propagation, and a low cost. In addition, the concentration of the zinc ions should not be too low, because the bacteriostatic effect will be affected if the concentration of zinc ions is too low, and the antibacterial agent cannot be sufficiently absorbed and utilized if the concentration of zinc ions is too high and exceeds an upper limit of exchange adsorption of zirconium phosphate.

Optionally, the chemical components of the basic transparent glaze are, in percentage by weight, 40∼41.5% SiO₂, 11∼12% Al₂O₃, 5∼5.5% B₂O₃, 8∼9% CaO, 1.5∼2.5% MgO, 6∼7% ZnO, 4∼4.5% BaO, 2∼3% SrO, 9∼10.5% K₂O, 5∼7% Na₂O and 0.1∼0.25% of others, i.e. the transparent glaze of the present disclosure simultaneously contains boron, barium and strontium elements. In the present disclosure, only the chemical components of the basic transparent glaze are defined, but actually, raw material ingredients and ratios of the transparent glaze material of the ceramic tiles having specific chemical compositions may be varied, as long as they can have the chemical components composition of the basic transparent glaze of the present disclosure. Specifically, the transparent glaze containing boron is selected, an initial melting temperature of the transparent glaze is reduced, flatness of the glaze surface is improved, and meanwhile, the transparent glaze contains a certain amount of barium and strontium, which helps to improve the refractive index of the transparent glaze, and enhance the stereoscopic effect of the pattern under the glaze layer. Accordingly, the limitation of the chemical components of the basic transparent glaze in the present disclosure takes both the decorative effect of the glaze layer and the compatibility with zirconium phosphate carrier into consideration

The present invention provides a method as defined in claim 1 for preparing the above antibacterial ceramic tile, which includes the following process steps:
1) preparing a common ceramic tile green body having a base glaze layer and a decorative pattern layer, and applying a transparent glaze layer, wherein the transparent glaze layer is made by mixing a basic transparent glaze and a zirconium phosphate carrier, followed by high-temperature firing, to obtain a semi-finished product; and
2) spraying a composite antibacterial agent on a surface of the semi-finished product obtained in step 1), followed by polishing and grinding with a grinding disc and heat treatment to obtain a finished product of antibacterial ceram ic tile.

Specifically, the zirconium phosphate carrier *per* se in the transparent glaze layer of the present disclosure has certain antibacterial property, and due to low density thereof, the zirconium phosphate carrier is accumulated on the upper portion of the transparent glaze layer after high-temperature firing in step 1), and forms an interpenetrating structure at an interface with the basic transparent glaze. That is, the zirconium phosphate carrier accumulated on the upper portion of the transparent glaze layer actually has endowed the surface of the ceramic tile with a certain antibacterial property. However, the surface of the conventional porous structure needs to be subjected to polishing treatment due to extremely poor flatness and anti-fouling property. The present disclosure utilizes the porous structure of zirconium phosphate, and loads the composite antibacterial agent in a non-high-temperature treatment manner of spraying, polishing and grinding, and heat treatment, which not only overcomes the defects of extremely poor surface flatness and extremely poor anti-fouling property of the porous structure, but also avoids the effective antibacterial components of the composite antibacterial agent from being damaged by the high-temperature treatment while combining the composite antibacterial agent with the antibacterial porous material, thus endows the surface of the ceramic tile with long-lasting and excellent antibacterial property, and also avoids the phenomenon that the conventional antibacterial ceramic tile finished products have many defects in the appearance decorative effect after high-temperature firing.

Besides, the effective antibacterial components of the composite antibacterial agent of the present disclosure are the antibacterial oxide and the antibacterial ions, i.e. an antibacterial material having an ionic state and an antibacterial material in a granular shape, wherein the antibacterial ions mainly exhibit high sterilization efficiency, and the antibacterial oxide mainly exhibits sterilization durability. A method for preparing the composite antibacterial agent of the present disclosure is as follows: first stirring and mixing antibacterial oxide powder, water and a dispersing agent at a high speed, and performing ultrafine grinding the resultant mechanically, wherein the solid content is controlled to be 18~20%, to obtain a nano-antibacterial oxide slurry; then stirring and mixing acetate containing antibacterial ions, water and a chelating agent at a high speed, wherein the concentration of the chelating agent is controlled to be 0.2~0.6 mol/L, to obtain a solution containing the antibacterial ions; finally, mixing the nano-antibacterial oxide slurry of step 1) and the solution containing the antibacterial ions of step 2), and performing ultrafine grinding the resultant mechanically, to obtain the composite antibacterial agent. In the above, the chelating agent is selected from ethylenediamine tetraacetic acid, which has a polyhydroxy structure, and is used for chelating the antibacterial ions, so that the antibacterial material is uniformly dispersed in the solution, thereby facilitating the stability of the antibacterial effect.

Optionally, in step 1), the firing temperature of the high-temperature firing is 1150~1200 °C, and the firing cycle is 45-55 min. Specifically, if the firing temperature is too low, bubbles are easily formed in the glaze layer; and if the firing temperature is too high, the glaze surface tends to boil, thus causing defects such as poor flatness. Moreover, if the firing cycle is too short, the green body is not easy to be formed into porcelain, and the water absorption rate is too high; and if the firing cycle is too long, the green body is overfired, and the ceramic green body is easily deformed.

Optionally, in step 2), the grinding disc is a grinding disc made of wool felt material. Specifically, the wool felt is soft and has good toughness, which facilitates sufficient contact between the composite antibacterial agent and the surface of the semi-finished product of the ceramic tile.

Optionally, in the heat treatment in step 2), the heat treatment temperature is 80~120 °C, and the heat treatment duration is 10-20 s. Specifically, the heat treatment is mainly to rapidly cure the effective antibacterial components in the composite antibacterial agent in the zirconium phosphate carrier, and if the heat treatment temperature is too low or the heat treatment duration is too short, none of the effective antibacterial components can be effectively adsorbed; and if the heat treatment duration is too long, the production efficiency is affected.

An embodiment of the present disclosure further provides an antibacterial ceramic tile prepared according to the method of the present disclosure, including a ceramic tile body, a transparent glaze layer provided on an upper surface of the ceramic tile body, and an antibacterial layer permeated into one side of the transparent glaze layer facing away from the ceramic tile body, wherein the antibacterial layer includes porous zirconium phosphate and a composite antibacterial agent loaded on the porous zirconium phosphate, and the effective antibacterial components of the composite antibacterial agent include an antibacterial oxide and antibacterial ions.

The porous zirconium phosphate permeates into the transparent glaze layer. In a first aspect, it may endow the ceramic tile with certain antibacterial property; in a second aspect, permeation of the porous zirconium phosphate into the transparent glaze layer may allow a better bonding force between the antibacterial layer and the transparent glaze layer; in a third aspect, loading pores of the porous zirconium phosphate with the composite antibacterial agent (the antibacterial oxide and the antibacterial ions) may further improve the antibacterial property of the ceramic tile; and in a fourth aspect, after the composite antibacterial agent is loaded, the antibacterial oxide is a particulate matter, may be filled in the pores of the porous zirconium phosphate, and flattens the antibacterial layer with the antibacterial ions, thus the surface defects of the ceramic tile may be reduced.

Meanwhile, the effective antibacterial components of the composite antibacterial agent of the present disclosure are the antibacterial oxide and the antibacterial ions, i.e. an antibacterial material having an ionic state and an antibacterial material in a granular shape, wherein the antibacterial ions mainly exhibit high sterilization efficiency, and the antibacterial oxide mainly exhibits sterilization durability.

Optionally, the mass percentage of the porous zirconium phosphate is 0.5-2% of the antibacterial layer. In some possible implementations, the mass percentage of the porous zirconium phosphate is 0.5%, 0.1%, 0.15% or 2% of the antibacterial layer.

Optionally, the porous zirconium phosphate in the antibacterial layer is α-zirconium phosphate, with a specific surface area of 100-200 m²/g. In other implementations, the porous zirconium phosphate may also be β-zirconium phosphate or γ-zirconium phosphate, etc. In some possible implementations, the specific surface area of α-zirconium phosphate is 100 m²/g, 120 m²/g, 140 m²/g, 160 m²/g, 180 m²/g or 200 m²/g.

Optionally, the antibacterial oxide is zinc oxide with a particle size of 10∼30 nm, and the solid content thereof in the composite antibacterial agent is 3∼5%. In other implementations, the antibacterial oxide further may be titanium oxide, silver oxide, magnesium oxide, copper oxide, calcium oxide, etc. In some possible implementations, the particle size of zinc oxide is 10 nm, 15 nm, 20 nm, 25 nm or 30 nm. The solid content of zinc oxide in the composite antibacterial agent is 3%, 3.5%, 4%, 4.5% or 5%.

Optionally, the antibacterial ions are zinc ions. In other implementations, the antibacterial ions further may be silver ions, copper ions, etc.

Optionally, the chemical components of the transparent glaze layer are, in percentage by weight, 40∼41.5% SiO₂, 11∼12% Al₂O₃, 5∼5.5% B₂O₃, 8∼9% CaO, 1.5∼2.5% MgO, 6∼7% ZnO, 4∼4.5% BaO, 2∼3% SrO, 9∼10.5% K₂O, 5∼7% Na₂O and 0.1∼0.25% of others,

An implementation of the present disclosure further provides a method for preparing an antibacterial ceramic tile, including the following process steps:
1) applying mixed transparent glaze material and zirconium phosphate onto a surface of a ceramic tile body, followed by high-temperature firing, to obtain a semi-finished product; and
2) applying a composite antibacterial agent solution onto a surface of the semi-finished product obtained in step 1), followed by polishing and grinding with a grinding disc and heat treatment to obtain the antibacterial ceramic tile.

As the density of the zirconium phosphate carrier is lower than the density of the transparent glaze, when the transparent glaze and the zirconium phosphate are fired at a high temperature, the transparent glaze is located below the zirconium phosphate (the transparent glaze is much closer to the ceramic tile body), and the zirconium phosphate layer, after being fired at a high temperature, forms an interpenetrating structure with the transparent glaze layer, and the fired zirconium phosphate layer forms a porous zirconium phosphate layer structure. The porous zirconium phosphate endows the surface of the ceramic tile with a certain antibacterial property. However, the surface of the conventional porous structure needs to be subjected to polishing treatment due to extremely poor flatness and anti-fouling property. The present disclosure utilizes the porous structure of zirconium phosphate, then adds the composite antibacterial agent solution in the porous structure, and loads the composite antibacterial agent in a manner of polishing and grinding, and heat treatment, which not only overcomes the defects of extremely poor surface flatness and extremely poor anti-fouling property of the porous structure, but also avoids the effective antibacterial components of the composite antibacterial agent from being damaged by the high-temperature treatment while combining the composite antibacterial agent with the antibacterial porous material, thus endows the surface of the ceramic tile with long-lasting and excellent antibacterial property, and also avoids the phenomenon that the conventional antibacterial ceramic tile finished products have many defects in the appearance decorative effect after high-temperature firing.

Meanwhile, the effective antibacterial components of the composite antibacterial agent of the present disclosure are the antibacterial oxide and the antibacterial ions, i.e. an antibacterial material having an ionic state and an antibacterial material in a granular shape, wherein the antibacterial ions mainly exhibit high sterilization efficiency, and the antibacterial oxide mainly exhibits sterilization durability.

Optionally, in the composite antibacterial agent solution, the concentration of the antibacterial ions is 0.01∼0.03 mol/L. In some implementations, the concentration of the antibacterial ions is 0.01 mol/L, 0.015 mol/L, 0.02 mol/L, 0.025 mol/L or 0.03 mol/L.

Optionally, in step 1), the firing temperature of the high-temperature firing is 1150~1200 °C, and the firing cycle is 45-55 min. In some possible implementations, the firing temperature of the high-temperature firing is 1150 °C, and the firing cycle is 55 min; the firing temperature of the high-temperature firing is 1200 °C, and the firing cycle is 45 min; or the firing temperature of the high-temperature firing is 1180 °C, and the firing cycle is 50 min.

Optionally, in step 2), the grinding disc is a grinding disc made of wool felt material.

Optionally, in the heat treatment in step 2), the heat treatment temperature is 80~120 °C, and the heat treatment duration is 10-20 s. In some possible implementations, the heat treatment temperature is 80 °C, and the heat treatment duration is 20 s; the heat treatment temperature is 120 °C, and the heat treatment duration is 10 s; or the heat treatment temperature is 100 °C, and the heat treatment duration is 15 s.

Compared with the prior art, the beneficial effects of the implementations of the present disclosure include, for example, in the present disclosure
(1) the present disclosure introduces zirconium phosphate into the antibacterial glaze layer on the surface of the ceramic tile, due to the characteristic of low density, the zirconium phosphate is accumulated on the upper portion of the glaze layer after high-temperature firing and forms the surface having a porous structure, so as to act as the carrier to which the composite antibacterial agent is attached, thus enhancing the bonding force between the antibacterial material and the ceramic tile, endowing the ceramic tile with longer-lasting and more excellent antibacterial property, without affecting the appearance decorative effect on the surface of the ceramic tile.
(2) The present disclosure adopts the composite antibacterial agent, wherein the effective antibacterial components include the antibacterial oxide and the antibacterial ions of different forms, the antibacterial oxide fills the porous structure of the zirconium phosphate carrier and also has both antibacterial and anti-fouling effects, and the antibacterial ions penetrate and fill the porous structure of the zirconium phosphate carrier and play an antibacterial effect synergistically with the antibacterial oxide, thus the antibacterial effect of the ceramic tiles of the present disclosure is lasting and efficient.
(3) By adjusting the method for preparing the antibacterial ceramic tile, the present disclosure adapts the antibacterial ceramic tile to the antibacterial glaze layer, wherein the composite antibacterial agent is not subjected to high-temperature treatment and then maintains the antibacterial activity of the antibacterial material to the maximum degree, and the effective antibacterial components are effectively exposed to the surface of the ceramic tile through spraying, and polishing and grinding treatment, thereby enabling the antibacterial effect to be more excellent.
(4) The preparation method of the present disclosure is simple in steps, has strong controllability, and is beneficial to large-scale industrial production.

### Brief Description of Drawings

In order to more clearly illustrate technical solutions of implementations of the present disclosure, accompanying drawings which need to be used in the implementations will be introduced below briefly, and it should be understood that the accompanying drawings below merely show some implementations of the present disclosure, and therefore should not be considered as limitation on the scope, and a person ordinarily skilled in the art still could obtain other relevant accompanying drawings according to these accompanying drawings, without using any creative efforts.
FIG. 1 is a sectional schematic view of a partial structure of an antibacterial ceramic tile provided in an embodiment of the present disclosure; and
FIG. 2 is a sectional schematic view of a ceramic tile body provided in an embodiment of the present disclosure.

### Reference signs:

100-ceramic tile body; 101-green body layer; 102-base glaze layer; 103-decorative pattern layer; 200-transparent glaze layer; 300-antibacterial layer.

### Detailed Description of Embodiments

The present disclosure is specifically described below in combination with implementations, so as to facilitate the understanding of a person skilled in the art to the present disclosure. It is necessary to specifically indicate herein that the implementations are merely used to further illustrate the present disclosure, but should not be construed as limitation to the scope of protection of the present disclosure, and non-essential improvements and adjustments made by a person skilled in the art to the present disclosure according to the contents disclosed above still should belong to the scope of protection of the present disclosure. Meanwhile, all of the raw materials mentioned below that are not described in detail are commercially available; and all of the process steps or methods that are not mentioned in detail are process steps or methods that are known to a person skilled in the art.

### Implementation 1

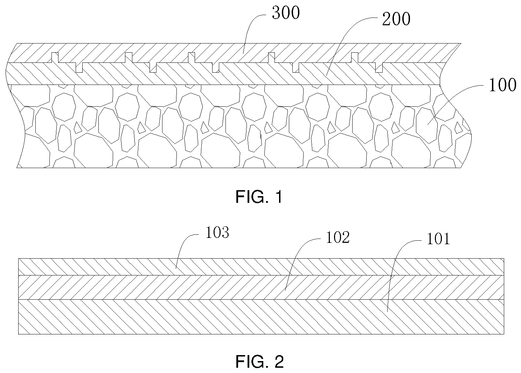

Referring to FIG. 1 and FIG. 2, the present disclosure provides an antibacterial ceramic tile, which is provided with a green body layer 101, a base glaze layer 102, a decorative pattern layer 103 and an antibacterial glaze layer from bottom to top. The antibacterial glaze layer is composed of a base transparent glaze and a zirconium phosphate loaded with composite antibacterial agent. The zirconium phosphate loaded with composite antibacterial agent is accumulated on an upper portion of the antibacterial glaze layer, and the effective antibacterial components of the composite antibacterial agent are an antibacterial oxide and antibacterial ions.

In the above, the carrier zirconium phosphate in the zirconium phosphate loaded with composite antibacterial agent is α-zirconium phosphate prepared by a hydrothermal method, with a specific surface area of 100 m²/g; the antibacterial oxide is 30 nm zinc oxide, with a solid content of 3% in the composite antibacterial agent; the antibacterial ions are zinc ions, with concentration of 0.03 mol/L in the composite antibacterial agent; and the chemical components of the basic transparent glaze are, in percentage by weight, 41.02% SiO₂, 11.76% Al₂O₃, 5.50% B₂O₃, 8.74% CaO, 2.35% MgO, 6.78% ZnO, 4.23% BaO, 2.64% SrO, 10.03% K₂O, 6.80% Na₂O and 0.15% of others.

Method for preparing the antibacterial ceramic tile:
1) preparing the green body layer 101, the base glaze layer 102 and the decorative pattern layer 103 in sequence using an existing ceramic tile molding method, applying a transparent glaze layer 200 on the decorative pattern layer 103, wherein the transparent glaze layer 200 is composed of a mixture of 99% basic transparent glaze and 1% zirconium phosphate carrier, followed by high-temperature firing at a firing temperature of 1150 °C for a firing cycle of 55 min, to obtain a semi-finished product; and
2) spraying a composite antibacterial agent on a surface of the semi-finished product obtained in step 1), followed by polishing and grinding with a grinding disc made of wool felt material, and heat treatment at a temperature of 120 °C for 10 s, to obtain a finished product of the antibacterial ceramic tile of Implementation 1.

The antibacterial ceramic tile prepared by the above method is provided with the green body layer 101, the base glaze layer 102, the decorative pattern layer 103, the transparent glaze layer 200 and the antibacterial layer 300 from bottom to top. The transparent glaze layer 200 and the antibacterial layer 300 penetrate into each other, and the antibacterial layer 300 includes porous zirconium phosphate and the composite antibacterial agent loaded on the porous zirconium phosphate. The effective antibacterial components of the composite antibacterial agent include the antibacterial oxide and the antibacterial ions.

It should be noted that a ceramic tile body 100 includes the green body layer 101, the base glaze layer 102 and the decorative pattern layer 103 provided from bottom to top, the transparent glaze layer 200 is provided on the decorative pattern layer 103, and an antibacterial layer 300 is provided on the transparent glaze layer 200. The basic transparent glaze may also be referred to as a transparent glaze layer 200; and the antibacterial glaze layer may be composed of the transparent glaze layer 200 and the antibacterial layer 300.

In addition, in FIG. 1, the antibacterial layer 300 is partially embedded in the transparent glaze layer 200, and the transparent glaze layer 200 is partially embedded in the antibacterial layer 300, indicating that the antibacterial layer and the transparent glaze layer penetrate into each other.

### Comparative Example 1

An antibacterial ceramic tile is provided with a green body layer, a base glaze layer, a decorative pattern layer, a transparent glaze layer and an antibacterial layer from bottom to top. The antibacterial layer is a composite antibacterial agent. The effective antibacterial components of the composite antibacterial agent are an antibacterial oxide and antibacterial ions.

In the above, the antibacterial oxide is 30 nm zinc oxide, with a solid content of 3% in the composite antibacterial agent; the antibacterial ions are zinc ions, with concentration of 0.03 mol/L in the composite antibacterial agent; and the chemical components of the transparent glaze layer are, in percentage by weight, 41.02% SiO₂, 11.76% Al₂O₃, 5.50% B₂O₃, 8.74% CaO, 2.35% MgO, 6.78% ZnO, 4.23% BaO, 2.64% SrO, 10.03% K₂O, 6.80% Na₂O and 0.15% of others.

Method for preparing the antibacterial ceramic tile:
1) preparing the green body layer, the base glaze layer, the decorative pattern layer and the transparent glaze layer in sequence using an existing ceramic tile molding method, followed by high-temperature firing at a firing temperature of 1150 °C for a firing cycle of 55 min, to obtain a semi-finished product; and
2) spraying a composite antibacterial agent on a surface of the semi-finished product obtained in step 1), followed by polishing and grinding with a grinding disc made of wool felt material, and heat treatment at a temperature of 120 °C for 10 s, to obtain a finished product of the antibacterial ceramic tile of Comparative Example 1.

The antibacterial ceramic tile prepared by the above method is provided with the green body layer, the base glaze layer, the decorative pattern layer, the transparent glaze layer and the antibacterial layer from bottom to top. The antibacterial layer is the composite antibacterial agent. The effective antibacterial components of the composite antibacterial agent are the antibacterial oxide and the antibacterial ions.

### Comparative Example 2

An antibacterial ceramic tile is provided with a green body layer, a base glaze layer, a decorative pattern layer and an antibacterial glaze layer from bottom to top. The antibacterial glaze layer is composed of a base transparent glaze and a zirconium phosphate loaded with a composite antibacterial agent. The effective antibacterial components of the composite antibacterial agent are an antibacterial oxide and antibacterial ions.

In the above, the carrier zirconium phosphate in the zirconium phosphate loaded with composite antibacterial agent is α-zirconium phosphate prepared by a hydrothermal method, with a specific surface area of 100 m²/g; the antibacterial oxide is 30 nm zinc oxide, with a solid content of 3% in the composite antibacterial agent; the antibacterial ions are zinc ions, with concentration of 0.03 mol/L in the composite antibacterial agent; the chemical components of the basic transparent glaze are, in percentage by weight, 41.02% SiO₂, 11.76% Al₂O₃, 5.50% B₂O₃, 8.74% CaO, 2.35% MgO, 6.78% ZnO, 4.23% BaO, 2.64% SrO, 10.03% K₂O, 6.80% Na₂O and 0.15% of others.

Method for preparing the antibacterial ceramic tile:
1) preparing the green body layer, the base glaze layer and the decorative pattern layer in sequence using an existing ceramic tile molding method, applying a transparent glaze layer on the decorative pattern layer, wherein the transparent glaze layer is composed of a mixture of 98% basic transparent glaze, 1% zirconium phosphate and 1% composite antibacterial agent, followed by high-temperature firing at a firing temperature of 1150 °C for a firing cycle of 55 min, to obtain a semi-finished product; and
2) polishing the semi-finished product obtained in step 1), to obtain a finished product of the antibacterial ceramic tile of Comparative Example 2.

The antibacterial ceramic tile prepared by the above method is provided with a green body layer, a base glaze layer, a decorative pattern layer and an antibacterial layer from bottom to top. The antibacterial layer is composed of a transparent glaze layer, zirconium phosphate and a composite antibacterial agent. The effective antibacterial components of the composite antibacterial agent are the antibacterial oxide and the antibacterial ions.

### Implementation 2

Referring to FIG. 1 and FIG. 2, the present disclosure provides an antibacterial ceramic tile, which is provided with a green body layer 101, a base glaze layer 102, a decorative pattern layer 103 and an antibacterial glaze layer from bottom to top. The antibacterial glaze layer is composed of a base transparent glaze and a zirconium phosphate loaded with composite antibacterial agent. The zirconium phosphate loaded with composite antibacterial agent is accumulated on an upper portion of the antibacterial glaze layer, and the effective antibacterial components of the composite antibacterial agent are an antibacterial oxide and antibacterial ions.

In the above, the carrier zirconium phosphate in the zirconium phosphate loaded with composite antibacterial agent is α-zirconium phosphate prepared by a hydrothermal method, with a specific surface area of 200 m²/g; the antibacterial oxide is 10 nm zinc oxide, with a solid content of 5% in the composite antibacterial agent; the antibacterial ions are zinc ions, with concentration of 0.01 mol/L in the composite antibacterial agent; and the chemical components of the basic transparent glaze are, in percentage by weight, 41.5% SiO₂, 11.25% Al₂O₃, 5.5% B₂O₃, 8% CaO, 2. 5% MgO, 6% ZnO, 4.5% BaO, 2 % SrO, 10.5% K₂O, 7% Na₂O and 0.25% of others.

Method for preparing the antibacterial ceramic tile:
1) preparing the green body layer 101, the base glaze layer 102 and the decorative pattern layer 103 in sequence using an existing ceramic tile molding method, applying a transparent glaze layer 200 on the decorative pattern layer 103, wherein the transparent glaze layer 200 is composed of a mixture of 98% basic transparent glaze and 2% zirconium phosphate carrier, followed by high-temperature firing at a firing temperature of 1200 °C for a firing cycle of 45 min, to obtain a semi-finished product; and
2) spraying a composite antibacterial agent on a surface of the semi-finished product obtained in step 1), followed by polishing and grinding with a grinding disc made of wool felt material, and heat treatment at a temperature of 80 °C for 20 s, to obtain a finished product of the antibacterial ceramic tile of Implementation 2.

The antibacterial ceramic tile prepared by the above method is provided with the green body layer 101, the base glaze layer 102, the decorative pattern layer 103, the transparent glaze layer 200 and the antibacterial layer 300 from bottom to top. The transparent glaze layer 200 and the antibacterial layer 300 penetrate into each other, and the antibacterial layer 300 includes porous zirconium phosphate and the composite antibacterial agent loaded on the porous zirconium phosphate. The effective antibacterial components of the composite antibacterial agent include the antibacterial oxide and the antibacterial ions.

It should be noted that the basic transparent glaze may be referred to as a transparent glaze layer 200; and the antibacterial glaze layer may be composed of the transparent glaze layer 200 and the antibacterial layer 300.

In addition, in FIG. 1, the antibacterial layer 300 is partially embedded in the transparent glaze layer 200, and the transparent glaze layer 200 is partially embedded in the antibacterial layer 300, indicating that the antibacterial layer and the transparent glaze layer penetrate into each other.

### Implementation 3

The present disclosure provides an antibacterial ceramic tile, which is provided with a green body layer 101, a base glaze layer 102, a decorative pattern layer 103 and an antibacterial glaze layer from bottom to top. The antibacterial glaze layer is composed of a base transparent glaze and a zirconium phosphate loaded with composite antibacterial agent. The zirconium phosphate loaded with composite antibacterial agent is accumulated on an upper portion of the antibacterial glaze layer, and the effective antibacterial components of the composite antibacterial agent are an antibacterial oxide and antibacterial ions.

In the above, the carrier zirconium phosphate in the zirconium phosphate loaded with composite antibacterial agent is α-zirconium phosphate prepared by a hydrothermal method, with a specific surface area of 150 m²/g; the antibacterial oxide is 20 nm zinc oxide, with a solid content of 4% in the composite antibacterial agent; the antibacterial ions are zinc ions, with concentration of 0.02 mol/L in the composite antibacterial agent; and the chemical components of the basic transparent glaze are, in percentage by weight, 40.4% SiO₂, 12% Al₂O₃, 5.2% B₂O₃, 9% CaO, 2. 5% MgO, 7% ZnO, 4.2% BaO, 3% SrO, 9.8% K₂O, 6.8% Na₂O and 0.1% of others.

Method for preparing the antibacterial ceramic tile:
1) preparing the green body layer 101, the base glaze layer 102 and the decorative pattern layer 103 in sequence using an existing ceramic tile molding method, applying a transparent glaze layer 200 on the decorative pattern layer 103, wherein the transparent glaze layer 200 is composed of a mixture of 99.5% basic transparent glaze and 0.5% zirconium phosphate carrier, followed by high-temperature firing at a firing temperature of 1185 °C for a firing cycle of 50 min, to obtain a semi-finished product; and
2) spraying a composite antibacterial agent on a surface of the semi-finished product obtained in step 1), followed by polishing and grinding with a grinding disc made of wool felt material, and heat treatment at a temperature of 100 °C for 15 s, to obtain a finished product of the antibacterial ceramic tile of Implementation 3.

The antibacterial ceramic tile prepared by the above method is provided with the green body layer 101, the base glaze layer 102, the decorative pattern layer 103, the transparent glaze layer 200 and the antibacterial layer 300 from bottom to top. The transparent glaze layer 200 and the antibacterial layer 300 penetrate into each other, and the antibacterial layer 300 includes porous zirconium phosphate and the composite antibacterial agent loaded on the porous zirconium phosphate. The effective antibacterial components of the composite antibacterial agent include the antibacterial oxide and the antibacterial ions.

It should be noted that the basic transparent glaze may be referred to as a transparent glaze layer 200; and the antibacterial glaze layer may be composed of the transparent glaze layer 200 and the antibacterial layer 300.

In addition, in FIG. 1, the antibacterial layer 300 is partially embedded in the transparent glaze layer 200, and the transparent glaze layer 200 is partially embedded in the antibacterial layer 300, indicating that the antibacterial layer and the transparent glaze layer penetrate into each other.

### Implementation 4

Referring to FIG. 1 and FIG. 2, the present disclosure provides an antibacterial ceramic tile, which is provided with a green body layer 101, a base glaze layer 102, a decorative pattern layer 103 and an antibacterial glaze layer from bottom to top. The antibacterial glaze layer is composed of a base transparent glaze and a zirconium phosphate loaded with composite antibacterial agent. The zirconium phosphate loaded with composite antibacterial agent is accumulated on an upper portion of the antibacterial glaze layer. The antibacterial glaze layer is composed of a base transparent glaze and a zirconium phosphate loaded with composite antibacterial agent.

In the above, the carrier zirconium phosphate in the zirconium phosphate loaded with composite antibacterial agent is α-zirconium phosphate prepared by a hydrothermal method, with a specific surface area of 165 m²/g; the antibacterial oxide is 15 nm zinc oxide, with a solid content of 4.5% in the composite antibacterial agent; the antibacterial ions are zinc ions, with concentration of 0.015 mol/L in the composite antibacterial agent; and the chemical components of the basic transparent glaze are, in percentage by weight, 41% SiO₂, 11.5% Al₂O₃, 5.4% B₂O₃, 8.7% CaO, 2.3% MgO, 6.8% ZnO, 4.35% BaO, 2.8% SrO, 10.5% K₂O, 6.45% Na₂O and 0.2% of others.

Method for preparing the antibacterial ceramic tile:
1) preparing the green body layer 101, the base glaze layer 102 and the decorative pattern layer 103 in sequence using an existing ceramic tile molding method, applying a transparent glaze layer 200 on the decorative pattern layer 103, wherein the transparent glaze layer 200 is composed of a mixture of 98.5% basic transparent glaze and 1.5% zirconium phosphate carrier, followed by high-temperature firing at a firing temperature of 1200 °C for a firing cycle of 50 min, to obtain a semi-finished product; and
2) spraying a composite antibacterial agent on a surface of the semi-finished product obtained in step 1), followed by polishing and grinding with a grinding disc made of wool felt material, and heat treatment at a temperature of 110 °C for 15 s, to obtain a finished product of the antibacterial ceramic tile of Implementation 4.

The antibacterial ceramic tile prepared by the above method is provided with the green body layer 101, the base glaze layer 102, the decorative pattern layer 103, the transparent glaze layer 200 and the antibacterial layer 300 from bottom to top. The transparent glaze layer 200 and the antibacterial layer 300 penetrate into each other, and the antibacterial layer 300 includes porous zirconium phosphate and the composite antibacterial agent loaded on the porous zirconium phosphate. The effective antibacterial components of the composite antibacterial agent include the antibacterial oxide and the antibacterial ions.

It should be noted that the basic transparent glaze may be referred to as a transparent glaze layer 200; and the antibacterial glaze layer may be composed of the transparent glaze layer 200 and the antibacterial layer 300.

In addition, in FIG. 1, the antibacterial layer 300 is partially embedded in the transparent glaze layer 200, and the transparent glaze layer 200 is partially embedded in the antibacterial layer 300, indicating that the antibacterial layer and the transparent glaze layer penetrate into each other.

### Experimental Example: Property Detection

According to the standard Antibacterial Function of Antibacterial Ceramic JC/T 897-2014, the finished products obtained in Implementation 1 to Implementation 4, the finished product obtained in Comparative Example 1, the finished product obtained in Comparative Example 2 and common antibacterial ceramic tiles (commercially available commodity) purchased from Hongli Construction Materials Trading Co., Ltd. were subjected to antibacterial property detection, respectively, and detection results thereof are shown in Table 1 below. From the data in Table 1, it can be seen that the antibacterial property of the antibacterial ceramic tiles prepared in the present disclosure are excellent, and all of the antibacterial ratios thereof reach 99.9% or more, and the antibacterial durability is higher than 99.5%.

**Table 1 Detection Results of Relevant Properties of Implementations, Comparative Examples and Commercially Available Commodity**

| Sample Name | Microorganism Tested | Antibacterial Rate (%) | Antibacterial Durability (%) |
|---|---|---|---|
| commercially available common antibacterial ceramic tile | e. coli | 52.6 | 30.5 |
| | staphylococcus aureus | 70.5 | 45.1 |
| Implementation 1 | e. coli | 99.97 | 99.8 |
| | staphylococcus aureus | 99.96 | 99.9 |
| Comparative Example 1 | e. coli | 90.25 | 72.4 |
| | staphylococcus aureus | 89.38 | 70.2 |
| Comparative Example 2 | e. coli | 86.12 | 63.8 |
| | staphylococcus aureus | 88.74 | 61.5 |
| Implementation 2 | e. coli | 99.94 | 99.9 |
| | staphylococcus aureus | 99.95 | 99.7 |
| Implementation 3 | e. coli | 99.99 | 99.9 |
| | staphylococcus aureus | 99.99 | 99.9 |
| Implementation 4 | e. coli | 99.97 | 99.9 |
| | staphylococcus aureus | 99.98 | 99.8 |

### Industrial Applicability

To sum up, the present disclosure provides an antibacterial ceramic tile and a method for preparing the same, and the antibacterial property of the ceramic tile is excellent.

## Claims

1. A method for preparing an antibacterial ceramic tile, wherein the antibacterial ceramic tile comprising an antibacterial glaze layer arranged on an upper surface of a ceramic tile, wherein the antibacterial glaze layer is composed of a basic transparent glaze and a zirconium phosphate loaded with composite antibacterial agent, wherein the zirconium phosphate loaded with composite antibacterial agent is accumulated at an upper portion of the antibacterial glaze layer, and effective antibacterial components of the composite antibacterial agent are an antibacterial oxide and antibacterial ions,
**characterized in that** the method comprising following process steps:
1) preparing a common ceramic tile green body having a base glaze layer (102) and a decorative pattern layer (103), and applying a transparent glaze layer (200), wherein the transparent glaze layer (200) is made by mixing a basic transparent glaze and a zirconium phosphate carrier, followed by high-temperature firing, to obtain a semi-finished product; and
2) spraying a composite antibacterial agent on a surface of the semi-finished product obtained in step 1), followed by polishing and grinding using a grinding disc and a heat treatment, to obtain a finished product of the antibacterial ceramic tile.

2. The method for preparing the antibacterial ceramic tile according to claim 1, wherein an addition amount of a carrier zirconium phosphate in the zirconium phosphate loaded with composite antibacterial agent is 0.5-2% of the antibacterial glaze layer by mass percentage.

3. The method for preparing the antibacterial ceramic tile according to claim 1 or 2, wherein a carrier zirconium phosphate in the zirconium phosphate loaded with composite antibacterial agent is α-zirconium phosphate prepared by a hydrothermal method, and a specific surface area thereof is 100-200 m²/g.

4. The method for preparing the antibacterial ceramic tile according to any one of claims 1-3, wherein the antibacterial oxide is 10∼30 nm zinc oxide, and a solid content thereof in the composite antibacterial agent is 3∼5% by mass percentage.

5. The method for preparing the antibacterial ceramic tile according to any one of claims 1-4, wherein the antibacterial ions are zinc ions, and a concentration thereof in the composite antibacterial agent is 0.01∼0.03 mol per one L of the composite antibacterial agent.

6. The method for preparing the antibacterial ceramic tile according to any one of claims 1-5, wherein chemical components of the basic transparent glaze comprise, in percentage by weight, 40∼41.5% SiO₂, 11∼12% Al₂O₃, 5∼5.5% B₂O₃, 8∼9% CaO, 1.5∼2.5% MgO, 6∼7% ZnO, 4∼4.5% BaO, 2∼3% SrO, 9∼10.5% K₂O, 5∼7% Na₂O and 0.1∼0.25% of others.

7. The method for preparing the antibacterial ceramic tile according to any one of claims 1-6, wherein in the step 1), a firing temperature of the high-temperature firing is 1150∼1200 °C, and the firing cycle is 45∼55 min.

8. The method for preparing the antibacterial ceramic tile according to any one of claims 1-7, wherein in the step 2), the grinding disc is a grinding disc made of wool felt material.

9. The method for preparing the antibacterial ceramic tile according to any one of claims 1-8, wherein in the heat treatment in the step 2), a heat treatment temperature is 80∼120 °C, and a heat treatment duration is 10∼20 s.

## Patentansprüche

1. Verfahren zur Herstellung einer antibakteriellen Keramikfliese, wobei die antibakterielle Keramikfliese eine antibakterielle Glasurschicht umfasst, die auf der oberen Oberfläche der keramischen Fliese angeordnet ist, wobei die antibakterielle Glasurschicht eine basische transparente Glasur und Zirkoniumphosphat, das mit einem antibakteriellen Verbundmittel beladen ist, umfasst, wobei das mit dem antibakteriellen Verbundmittel beladene Zirkoniumphosphat im oberen Teil der antibakteriellen Glasurschicht akkumuliert ist und wirksame antibakterielle Komponenten des antibakteriellen Verbundmittels antibakterielles Oxid und antibakterielle Ionen sind,
**dadurch gekennzeichnet, dass** das Verfahren folgende Verfahrensschritte umfasst:
1) Herstellen eines gewöhnlichen keramischen Fliesengrünkörpers mit einer Grundglasurschicht (102) und einer dekorativen Musterschicht (103) und Aufbringen einer transparenten Glasurschicht (200), wobei die transparente Glasurschicht (200) durch Mischen einer basischen transparenten Glasur und eines Zirkoniumphosphatträgers hergestellt wird, gefolgt von einem Hochtemperaturbrand, um ein Halbzeug zu erhalten; und
2) Aufsprühen eines antibakteriellen Verbundmittels auf die Oberfläche des in Schritt 1) erhaltenen Halbzeugs, gefolgt von Polieren und Schleifen mit einer Schleifscheibe und einer Wärmebehandlung, um ein Fertigprodukt der antibakteriellen Keramikfliese zu erhalten.

2. Verfahren zur Herstellung der antibakteriellen Keramikfliese nach Anspruch 1, wobei eine Zugabemenge eines Zirkoniumphosphatträgers zu dem mit antibakteriellen Verbundmittel beladenen Zirkonphosphat 0,5 bis 2% bezogen auf den Gewichtsanteil der antibakteriellen Glasurschicht beträgt.

3. Verfahren zur Herstellung der antibakteriellen Keramikfliese nach Anspruch 1 oder 2, wobei ein Zirkoniumphosphatträger in dem mit antibakteriellen Verbundmittel beladene Zirkonphosphat α-Zirkonphosphat ist, das durch ein hydrothermales Verfahren hergestellt wurde, und dessen spezifische Oberfläche 100-200 m²/g beträgt.

4. Verfahren zur Herstellung der antibakteriellen Keramikfliese nach einem der Ansprüche 1 bis 3, wobei das antibakterielle Oxid 10 bis 30 nm Zinkoxid ist und sein Feststoffgehalt in dem antibakteriellen Verbundmittel 3 bis 5% bezogen auf den Gewichtsanteil beträgt.

5. Verfahren zur Herstellung der antibakteriellen Keramikfliese nach einem der Ansprüche 1 bis 4, wobei die antibakteriellen Ionen Zinkionen sind und ihre Konzentration in dem antibakteriellen Verbundmittel 0,01 bis 0,03 Mol pro 1 Liter des antibakteriellen Verbundmittels beträgt.

6. Verfahren zur Herstellung der antibakteriellen Keramikfliese nach einem der Ansprüche 1 bis 5, wobei die chemischen Komponente der basischen transparenten Glasur 40-41,5% SiO₂, 11-12% Al₂O₃ , 5-5,5% B₂O₃ , 8-9% CaO, 1,5-2,5% MgO, 6-7% ZnO, 4-4,5% BaO, 2-3% SrO, 9-10,5% K₂O, 5-7% Na₂O und 0,1-0,25% der anderen, bezogen auf den Gewichtsanteil, umfassen.

7. Verfahren zur Herstellung der antibakteriellen Keramikfliese nach einem der Ansprüche 1 bis 6, wobei in Schritt 1) die Brenntemperatur des Hochtemperaturbrands 1150 bis 1200°C beträgt und der Brennzyklus 45 bis 55 Minuten dauert.

8. Verfahren zur Herstellung der antibakteriellen Keramikfliese nach einem der Ansprüche 1 bis 7, wobei in Schritt 2) die Schleifscheibe eine Schleifscheibe aus Wollfilzmaterial ist.

9. Verfahren zur Herstellung der antibakteriellen Keramikfliese nach einem der Ansprüche 1 bis 8, wobei bei der Wärmebehandlung in Schritt 2) die Wärmebehandlungstemperatur 80-120°C und die Wärmebehandlungsdauer 10-20 s beträgt.

## Revendications

1. Procédé de préparation d'un carreau de céramique antibactérien, dans lequel le carreau de céramique antibactérien comprend une couche de glaçure antibactérienne disposée sur une surface supérieure d'un carreau de céramique, dans lequel la couche de glaçure antibactérienne est composée d'une glaçure transparente basique et d'un phosphate de zirconium chargé d'un agent antibactérien composite, dans lequel le phosphate de zirconium chargé d'agent antibactérien composite est accumulé au niveau d'une partie supérieure de la couche de glaçure antibactérienne, et les composants antibactériens efficaces de l'agent antibactérien composite sont un oxyde antibactérien et des ions antibactériens,
**caractérisé en ce que** le procédé comprend les étapes de processus suivantes :
1) la préparation d'un corps vert de carreau de céramique commun ayant une couche de glaçure de base (102) et une couche de motif décoratif (103), et l'application d'une couche de glaçure transparente (200), la couche de glaçure transparente (200) étant réalisée en mélangeant une glaçure transparente de base et un support de phosphate de zirconium, suivi d'une cuisson à haute température, pour obtenir un produit semi-fini; et
2) la pulvérisation d'un agent antibactérien composite sur une surface du produit semi-fini obtenu à l'étape 1), suivi d'un polissage et d'un meulage à l'aide d'un disque de meulage et d'un traitement thermique, pour obtenir un produit fini du carreau de céramique antibactérien.

2. Procédé de préparation du carreau de céramique antibactérien selon la revendication 1, dans lequel une quantité ajoutée d'un support de phosphate de zirconium dans le phosphate de zirconium chargé d'agent antibactérien composite est de 0,5 à 2 % de la couche de glaçure antibactérienne en pourcentage en masse.

3. Procédé de préparation du carreau de céramique antibactérien selon la revendication 1 ou 2, dans lequel un support de phosphate de zirconium dans le phosphate de zirconium chargé d'un agent antibactérien composite est du phosphate d'α-zirconium préparé par un procédé hydrothermique, et une surface spécifique de celui-ci est de 100-200 m²/g.

4. Procédé de préparation du carreau de céramique antibactérien selon l'une quelconque des revendications 1 à 3, dans lequel l'oxyde antibactérien est de l'oxyde de zinc de 10 à 30 nm et la teneur en solide de celui-ci dans l'agent antibactérien composite est de 3 à 5 % en pourcentage en masse.

5. Procédé de préparation du carreau céramique antibactérien selon l'une quelconque des revendications 1 à 4, dans lequel les ions antibactériens sont des ions zinc, et la concentration de ceux-ci dans l'agent antibactérien composite est de 0,01 à 0,03 mole par litre d'agent antibactérien composite.

6. Procédé de préparation du carreau de céramique antibactérien selon l'une quelconque des revendications 1 à 5, dans lequel les composants chimiques de l'émail transparent de base comprennent, en pourcentage en poids, 40∼41,5 % de SiO₂, 11∼12 % d'Al₂O₃, 5∼5,5 % de B₂O₃, 8∼9 % CaO, 1,5∼2,5 % MgO, 6∼7 % ZnO, 4∼4,5 % BaO, 2∼3 % SrO, 9∼10,5 % K₂O, 5∼7 % Na₂O et 0,1∼0,25 % des autres.

7. Procédé de préparation du carreau de céramique antibactérien selon l'une quelconque des revendications 1 à 6, dans lequel à l'étape 1), une température de cuisson de la cuisson à haute température est de 1150∼1200 °C, et le cycle de cuisson est de 45∼55 min.

8. Procédé de préparation du carreau de céramique antibactérien selon l'une quelconque des revendications 1 à 7, dans lequel, à l'étape 2), le disque de meulage est un disque de meulage constitué d'un matériau en feutre de laine.

9. Procédé de préparation du carreau de céramique antibactérien selon l'une quelconque des revendications 1 à 8, dans lequel, dans le traitement thermique de l'étape 2), une température de traitement thermique est de 80 à 120 °C et une durée de traitement thermique est de 10 à 20 s.
